# EUROPEAN PATENT APPLICATION

(11) **EP 1 584 550 A2**
(43) Date of publication of application: **12.10.2005**
(21) Application number: 05102723.3
(22) Date of filing: 07.04.2005
(51) Int. Cl.: B62K 19/46, B62J 9/00

(54) **Compartment for holding objects and/or helmets for motor vehicles**

(30) Priority: 09.04.2004 IT MI20040711
(71) Applicant: PIAGGIO & C. S.p.A., 56025 Pontedera (Pisa) (IT)
(72) Inventor: Palla, Roberto, 56023 Cascina (Pisa) (IT)
(74) Representative: Coppo, Alessandro

(57) **Abstract**

Removable compartment for holding objects and/or helmets (1) for motor vehicles (11), of the type equipped with handlebars (13), a frame (10) and a seat (20). The compartment (1) has at least one container element (2) and at least one cover element (3) that can close onto the container element (2) and is equipped with at least two outer sides (14, 15, 16) that can be removably coupled with at least two corresponding sides (17, 18, 19) of a portion (21), of the motor vehicle (11), and at least one undercut element (12) that can engage with at least one portion (23) of the seat (20) of the motor vehicle (11).

## Description

The present invention concerns a removable compartment for holding objects and/or helmets for motor vehicles.

In greater detail, the invention concerns a compartment for carrying objects of the type commonly known as a "carrier", researched and made in particular to reduce the instability of the vehicle generated by conventional carriers.

Conventional carriers, as known, are removable usually rigid compartments for carrying objects, suitable for containing the helmet or other accessories, during journeys and/or stops.

Conventional carriers are, in general, arranged behind the driver or, more precisely, behind the pillion passenger.

The use of known carriers involves the risk, if the load becomes excessive, of instability of the vehicle due to the higher position of the carrier with respect to the barycentre of the vehicle.

Moreover, the stresses to the rack, on which the carrier is applied, can damage the structure of the vehicle.

The carrier, moreover, in order to have an adequate capacity often projects sideways with respect to the body of the motor vehicle, resulting in an antiaesthetical look, further than increasing the aerodynamic coefficient of the vehicle.

In light of the above, there is clearly a need to be able to have a compartment for holding objects and/or for holding helmets, like the one according to the present invention, which allows the aerodynamic coefficient of the vehicle to be left practically unaltered.

Therefore, the purpose of the present invention is that of solving the problems of the prior art by providing a removable compartment for holding objects and/or helmets of the carrier type that allows the instability of the vehicle to be effectively reduced.

Another purpose of the present invention is that of providing carrier that allows the aerodynamic coefficient of the means not to be increased, at the same time offering a load capacity comparable to that of conventional carriers.

Another purpose of the present invention is that of providing a removable compartment for holding objects and/or helmets that can be installed in a central position with respect to the vehicle, instead of in a position set back towards the rear, as current schemes foresee.

These and other purposes are accomplished by the removable compartment for holding objects and/or helmets according to the present invention that has the characteristics of the attached claim 1.

Substantially, the removable compartment for holding objects and/or helmets for motor vehicles of the type comprising a handlebar, a frame and a seat, according to the present invention is equipped with at least one container element and with at least one cover element that can close onto the container element and is characterised in that it comprises at least two outer sides that can be removably coupled with two corresponding sides of a portion, of the motor vehicle, situated between the handlebars and the seat of the motor vehicle, and at least one undercut element that can engage under the seat of the motor vehicle.

Further characteristics and advantages of the present invention shall become clearer from the following description, given for illustrative and not limiting purposes, with reference to the attached drawings, in which:
- figure 1 shows a left hand side view of a scooter or motor vehicle equipped with the compartment for holding objects according to the present invention;
- figure 2 shows a left hand side view of a scooter or motor vehicle equipped with the compartment for holding objects according to the present invention, removed from the motor vehicle; and
- figure 3 shows a perspective view of a scooter or motor vehicle equipped with the compartment for holding objects according to the present invention, with the cover portion open.

Hereafter, the description shall focus upon application to a scooter, but it is clear how it must not be considered to be limited to this specific use.

With reference to the attached figures, a scooter can be seen, comprising the removable compartment for holding objects and/or helmets 1 according to the present invention.

The removable compartment 1 for holding objects according to the present invention comprises at least one container body 2 and at least one cover element 3 that can close in a known way onto the container element.

As an example, the container body 2 has a hinge (not shown) on its outside, suitable for allowing the cover element 3 to be opened and closed.

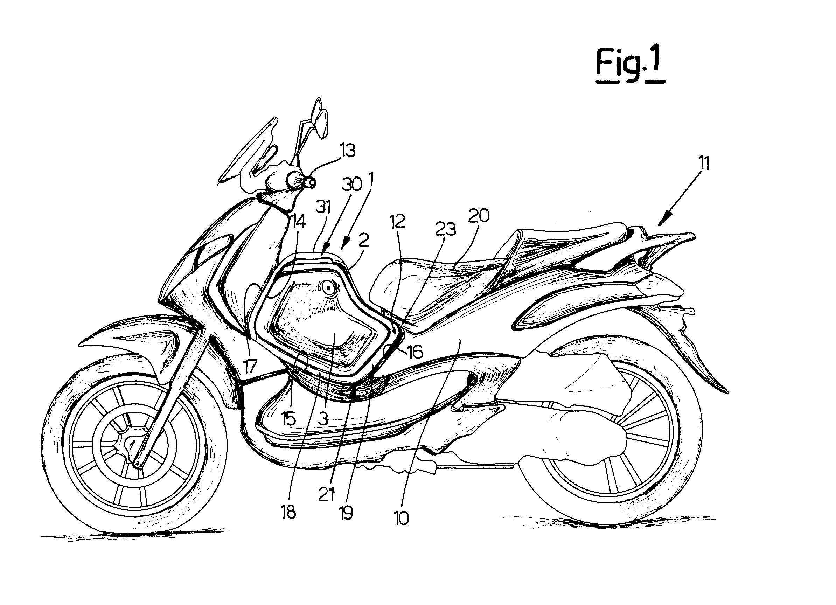

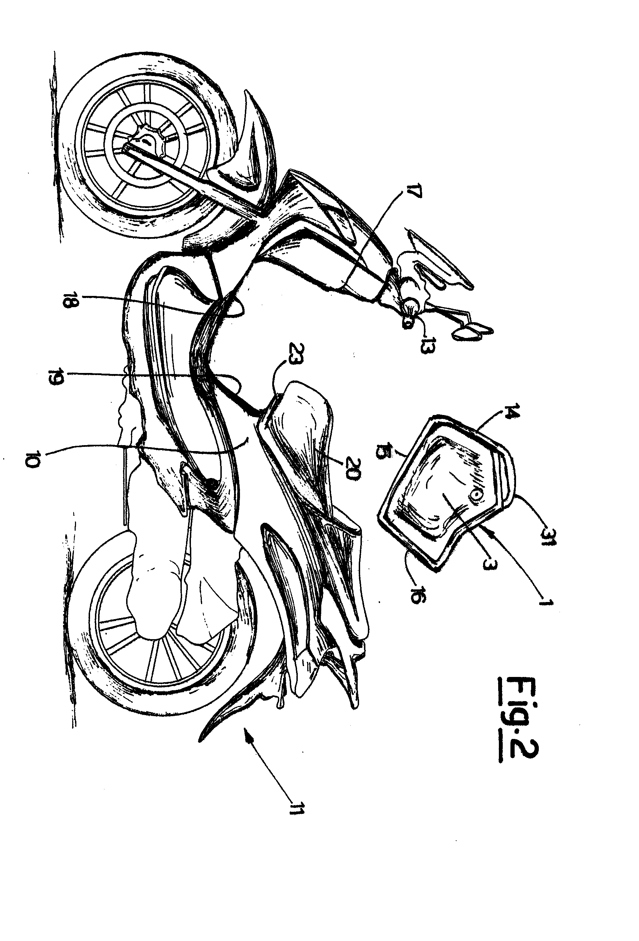

The compartment 1, as can be seen in figures 1 and 2, has an outer shape substantially provided with six sides, of which the three bottom and adjacent ones 14, 15, 16 can be releasably coupled with three corresponding sides 17, 18, 19 of the portion 21 of the motor vehicle 11 known as the "central tunnel".

In the field of motor vehicles and in particular of scooters the "central tunnel" is that portion (21) of the motor vehicle 11 situated between the handlebars 13 and the seat 20 of the motor vehicle.

In other terms, according to the present invention the portion 21, in other words the "central tunnel" of the motor vehicle 11 is shaped so as to have three sides 17, 18, 19 of matching shape and therefore able to be perfectly coupled with the three sides 14, 15, 16 of the compartment for holding objects 1.

In detail, the side 14 of the compartment 1 and the side 17 of the portion 21 have a corresponding shape and size.

In the same way, the side 15 of the compartment 1 and the side 18 of the portion 21 have a corresponding shape and size, just like the side 16 of the compartment 1 and the side 19 of the portion 21.

The compartment according to the present invention also has an undercut element 12 suitable for engaging, with the compartment 1 installed (see figure 1), under a portion 23 of the seat 20 of the motor vehicle 11 so as to lock the compartment 1 to the motor vehicle 11.

The outer sides 14, 15, 16 of the compartment for holding objects, just like the sides of the portion 21, are arranged to form a broken line.

To further lock the compartment for holding objects 1 in position in the "central tunnel" 21, suitable fastening means 9 are also foreseen.

According to a preferred embodiment, a magnetic plate (not shown) able to be coupled with a corresponding metal or magnetic plate foreseen on the portion 21 of the motor vehicle 11 is foreseen as fastening means 9 positioned in correspondence with at least one of the bottom sides 16, 14, 15 of the removable compartment 1.

In an alternative embodiment (not shown), strips of Velcro able to be coupled with corresponding strips or portions of Velcro foreseen on the portion 21 of the motor vehicle 11 are foreseen on the compartment for holding objects 1 as fastening means 9.

Another alternative embodiment (not shown) foresees the use of belts to be applied on suitable guides present both on the portion 21 of the motor vehicle 11 and on the compartment for holding objects 1 as fastening means 9.

In a further embodiment (not shown), quick fasteners are foreseen on the compartment for holding objects 1 as fastening means 9. Each quick fastener comprises a male element foreseen on the portion 21 of the motor vehicle 11 able to be coupled with a corresponding female element foreseen on the removable compartment for holding objects 1, or vice-versa.

Alternatively, each fastening means 9 can be provided with an anti-theft lock, for example a key-operated or other type of lock.

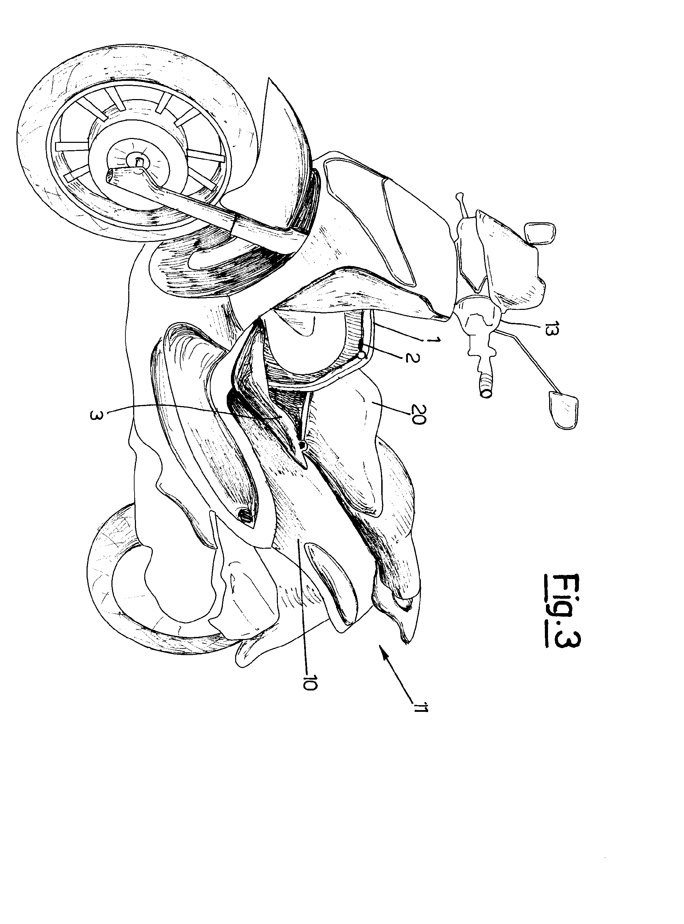

In figure 3 a removable compartment for holding objects 1 according to the present invention is shown with the cover element flipped back, in other words open.

In order to secure the cover element 3 closed on the container element 2, the latter, in a known way, has closing means (not shown), such as a key lock.

Moreover, to make the removable compartment for holding objects 1 easier to handle, grip means 30, such as a handle 31, are foreseen at the top of the compartment.

Although in the present description a container compartment equipped with just one container element 2 and with just one cover element 3 has been illustrated, it is still possible to foresee other configurations without for this reason departing from the scope of protection of the present invention.

As an example, in an alternative embodiment (not shown), the compartment for holding objects and/or helmets 1 has a tubular-shaped container element 2 provided at its ends with two cover elements 3 that can close on the container element 2.

The present invention has been described for illustrating, but not limiting purposes, according to its preferred embodiments, but it should be understood that variations and/or modifications can be brought by men skilled in the art without for this reason departing from the relative scope of protection, as defined by the attached claims.

## Claims

1. Removable compartment for holding objects and/or helmets (1) for motor vehicles (11), of the type equipped with handlebars (13), a frame (10) and a seat (20) comprising at least one container element (2) and at least one cover element (3) that can close onto said container element (2) **characterised in that** it comprises at least two outer sides (14, 15, 16) that can be removably coupled with at least two corresponding sides (17, 18, 19) of a portion (21), of the motor vehicle (11), situated between the handlebars (13) and the seat (20) of said motor vehicle (11), and at least one undercut element (12) that can engage with at least one portion (23) of the seat (20) of said motor vehicle (11).

2. Removable compartment for holding objects and/or helmets (1) according to claim 1, **characterised in that** it comprises three adjacent outer sides (14, 15, 16) that can be coupled with three corresponding sides (17, 18, 19) of a portion (21) of the motor vehicle (11).

3. Removable compartment for holding objects and/or helmets (1) according to claim 1, **characterised in that** said outer sides (14, 15, 16) are arranged to form a broken line and are shaped to couple with three corresponding adjacent sides (17, 18, 19) of said portion (21) of said motor vehicle (11).

4. Removable compartment for holding objects and/or helmets (1) according to claim 1, **characterised in that** it comprises fastening means (9) of said portion (21) of the motor vehicle (11).

5. Removable compartment for holding objects and/or helmets (1) according to claim 4, **characterised in that** said fastening means (9) comprise a magnetic plate able to be coupled with a corresponding plate foreseen on said portion (21) of said motor vehicle (11).

6. Removable compartment for holding objects and/or helmets (1) according to claim 4, **characterised in that** said fastening means (9) comprise at least one strip of Velcro able to be coupled with at least one corresponding strip of Velcro foreseen on said portion (21) of said motor vehicle (11).

7. Removable compartment for holding objects and/or helmets (1) according to claim 4, **characterised in that** said fastening means (9) comprise at least one belt to be applied on suitable guides present both on the portion (21) of the motor vehicle (11), and on the removable compartment (1).

8. Removable compartment for holding objects and/or helmets (1) according to claim 4, **characterised in that** said fastening means (9) comprise at least one quick fastener comprising a female element, connected to said compartment (1), able to be coupled with at least one corresponding male element, foreseen on said portion (21) of the motor vehicle (11), or vice-versa.

9. Removable compartment for holding objects and/or helmets (1) according to any one of claims 4 to 8, **characterised in that** said fastening means (9) comprise anti-theft means.

10. Removable compartment for holding objects and/or helmets (1) according to any one of the previous claims, **characterised in that** said compartment (1) comprises closing means for locking shut said at least one cover element (3) on said at least one container element (2).

11. Removable compartment for holding objects and/or helmets (1) according to any one of the previous claims, **characterised in that** it comprises grip means (30) for making said compartment (1) easier to handle.

12. Removable compartment for holding objects and/or helmets (1) according to claim 11, **characterised in that** said grip means (30) comprise at least a handle (31).

13. Removable compartment for holding objects and/or helmets (1) according to any one of the previous claims, **characterised in that** it comprises a tubular-shaped container element (2) and two cover elements (3) arranged at opposite ends of said container element (2) and able to close on said container element (2).

14. Motor vehicle **characterised in that** it comprises a portion (21) comprising three adjacent sides (14, 15, 16) shaped to couple with three adjacent sides of a compartment for holding objects as claimed in any one of claims 1 to 13.
